# EUROPÄISCHE PATENTANMELDUNG

(11) **EP 3 349 316 A1**
(43) Veröffentlichungstag der Anmeldung: **18.07.2018**
(21) Anmeldenummer: 17207672.1
(22) Anmeldetag: 15.12.2017
(51) Int. Cl.: H02G 15/02

(54) **HOCHDRUCKDURCHFÜHRUNG ZUR DURCHFÜHRUNG EINES KOAXIALKABELS IN EINEN HOCHDRUCKBEREICH**

(30) Priorität: 17.01.2017 DE 102017000361
(71) Anmelder: Liebherr-Elektronik GmbH, 88131 Lindau (DE)
(72) Erfinder: Lautenegger, Paolo, 88284 Mochenwangen (DE); Zinner, Tobias, 89287 Bellenberg (DE); Scheidt, Dr. Michael, 8623 Wetzikon (CH); Stucke, Michael, 89075 Ulm (DE)
(74) Vertreter: Laufhütte, Dieter

(57) **Zusammenfassung**

Die vorliegende Erfindung betrifft eine Hochdruckdurchführung (1) zur Durchführung eines Koaxialkabels (30) von einem Niederdruckbereich in einen Hochdruckbereich, wobei die Hochdruckdurchführung eine Trägerstruktur (4) mit wenigstens einer Längsbohrung (15) aufweist, die sich von einer Niederdruckseite der Trägerstruktur (4) bis zu einer Hochdruckseite der Trägerstruktur (4) erstreckt, wobei die Längsbohrung (15) zur Aufnahme zumindest des Innenleiters (31) eines Koaxialkabels (30) geeignet ist, der durchgängig von der Niederdruckseite bis zur Hochdruckseite durch die Längsbohrung (15) durchführbar ist, und wobei die Hochdruckdurchführung (1) ein oder mehrere Komponenten (9, 40, 41) aufweist, die in Axialrichtung der Längsbohrung (15) zumindest abschnittsweise als Aussenleiter und/oder Dielektrikum des durch die Längsbohrung durchgeführten Innenleiters (31) des Koaxialkabels (30) dienen.

## Beschreibung

Die Erfindung betrifft eine Hochdruckdurchführung zur Durchführung eines Koaxialkabels von einem Niederdruckbereich in einen Hochdruckbereich.

Eine Hochdruckdurchführung wird vor allem innerhalb eines hydraulischen oder pneumatischen Systems benötigt, bei dem eine Signalübertragung zwischen hohe Druckdifferenzen aufweisenden Räumen erfolgen soll. Insbesondere bei möglichen Druckdifferenzen von mehreren 100 bar ist eine ausreichende Abdichtung im Bereich der Kabeldurchführung wichtig.

Problematisch kann dies bei der Durchführung von sogenannten Koaxialkabeln sein, die zur Signalübertragung von Hochfrequenzsignalen im Bereich von wenigen MHz bis mehreren GHz eingesetzt werden. Eine beispielhafte Anwendung für die notwendige Durchführung von Koaxialkabeln zwischen einem Nieder- und Hochdruckbereich ist das sogenannte LiView Messverfahren der Anmelderin, mittels dem eine vektorielle Messung der Streuparameter eines Hydraulikzylinders erfolgen soll. Das Verfahren arbeitet mit Messfrequenzen im Bereich von wenigen MHz bis einigen GHz, die in den Zylinder ein- bzw. ausgekoppelt werden müssen, d.h. die Signalkabel müssen von ausserhalb in den Zylinderbereich eingeführt werden.

Von Bedeutung für die Signalqualität bzw. die Genauigkeit des Messverfahrens ist, dass die übertragenen Signale nicht durch Störungen im Übertragungsweg beeinträchtigt werden. Zu nennen sind hier unerwünschte Reflexionen aufgrund von Impedanzschwankungen des eingesetzten Koaxialkabels.

Die Aufgabe der vorliegenden Erfindung besteht demnach darin, eine passende Hochdruckdurchführung für ein Koaxialkabel aufzuzeigen, dass die obigen Bedingungen zu erfüllen weiß.

Gelöst wird diese Aufgabe durch eine Hochdruckdurchführung gemäß den Merkmalen des Anspruchs 1. Vorteilhafte Ausführungen der Hochdruckdurchführung sind Gegenstand der abhängigen Ansprüche.

Erfindungsgemäß umfasst die Hochdruckdurchführung wenigstens eine Trägerstruktur, die mit einer passenden Längsbohrung versehen ist. Die Längsbohrung erstreckt sich durch die Trägerstruktur von einer Hochdruckseite bis zu einer Niederdruckseite. Als Hochdruckseite der Trägerstruktur ist die Seite zu verstehen, die bei entsprechender Montage der Hochdruckdurchführung in einem hydraulischen oder pneumatischen System mit dem Hochdruckbereich des Systems verbunden ist, während die Niederdruckseite der Trägerstruktur mit der entsprechenden Niederdruckumgebung in Verbindung steht. Die Längsbohrung lässt folglich eine Verbindung zwischen den beiden Druckbereichen zu.

Die strukturelle Ausgestaltung der Längsbohrung ist so gewählt, dass zumindest der Innenleiter eines Koaxialkabels durchgängig, d.h. ohne Unterbrechung, von der Niederdruckseite zur Hochdruckseite durch die Längsbohrung verlegbar ist.

Für eine optimale Abdichtung gegenüber der Hochdruckseite sind zumindest in gewissen Abschnitten der Längsbohrung gewisse Kabelbestandteile zu entfernen, ausschliesslich der Innenleiter eines Koaxialkabels kann unterbrechungsfrei durch die Längsbohrung von der Niederdruckseite bis zur Hochdruckseite verlaufen. In Abschnitten der Längsbohrung innerhalb dieser Teile des Koaxialkabels, wie bspw. der Aussenleiter und/oder das Dielektrikum, entfernt sind, werden diese Funktionen durch geeignete Elemente der Hochdruckdurchführung übernommen.

Durch die Unterbrechungsfreie Verlegung zumindest des Innenleiters eines Koaxialkabels durch die gesamte Längsbohrung werden etwaige Verbindungsstellen mit Impedanzabweichungen vermieden, wodurch das Risiko auftretender Signalreflektionen auf ein Minimum reduziert werden kann. Es kann eine störungsfreie Übertragungsstrecke mit optimalen elektrischen Leitungseigenschaften geschaffen werden, Impedanz-Sprünge werden konsequent vermieden. Zudem gestattet die vorgeschlagene Konstruktion eine kompakte Bauform, die Integration mehrerer Funktionselemente führt zu Kosten- und Zuverlässigkeitsvorteilen.

Der Übergang des Außenleiters und/oder des Dielektrikums des Koaxialkabels auf eine die Funktion des Außenleiters und/oder Dielektrikums übernehmende Komponente der Hochdruckdurchführung erfolgt vorzugsweise innerhalb der Längsbohrung. Dementsprechend kann das Koaxialkabel mit vollständiger Zusammensetzung zumindest ein kleines Stück von der Niederdruckseite in die Längsbohrung hineinragen, eine Entfernung des Schutzmantels und gegebenenfalls des Außenleiters und des Dielektrikums muss folglich erst innerhalb der Längsbohrung erfolgen. Besonders bevorzugt liegen die Übergänge von den einzelnen Kabelkomponenten zu den Komponenten der Hochdruckdurchführung in Axialrichtung versetzt zueinander, d.h. das vollständige Kabel kann bspw. von der Niederdruckseite ein Stück in die Längsbohrung eingesetzt werden. Nach einer bestimmten Axiallänge der Längsbohrung ist die Mantelfläche des Koaxialkabels zu entfernen und das verbleibende Koaxialkabel bestehend aus Außenleiter, Dielektrikum und Innenleiter ist zumindest ein Stück innerhalb der Längsbohrung in Axialrichtung weitergeführt. Im Anschluss ist ebenfalls der Außenleiter des Koaxialkabels zu entfernen und die verbleibenden Bestandteile des Koaxialkabels (Dielektrikum und Innenleiter) werden in Axialrichtung weiter in der Längsbohrung durchgeführt. Ab diesem Abschnitt übernimmt eine Komponente der Hochdruckdurchführung die Funktion des Außenleiters. In einem dazu axial versetzt liegenden Bereich wird nunmehr auch noch das Dielektrikum des Koaxialkabels entfernt und dessen Funktion von einer weiteren Komponente der Hochdruckdurchführung übernommen. An der auf der Hochdruckseite liegenden Öffnung der Längsbohrung ragt nunmehr ausschließlich der Innenleiter des Koaxialkabels heraus. Demzufolge müssen die einzelnen Kabelbestandteile von aussen nach innen sukzessive entfernt werden bis nur noch der nackte Innenleiter übrig bleibt und auf der Hochdruckseite aus der Hochdruckdurchführung austreten kann.

Die Funktion des Außenleiters kann beispielsweise von der Trägerstruktur der Hochdruckdurchführung übernommen werden. In diesem Fall ist diese elektrisch leitend ausgeführt. Zudem ist eine elektrische Kontaktierung der Trägerstruktur mit dem Außenleiter des Koaxialkabels notwendig. Diese elektrische Verbindung kann entweder durch unmittelbare Kontaktierung erfolgen oder alternativ mittels etwaiger Verbindungsmittel, wie beispielsweise einem gekrümmten metallischen Kontaktelement.

Das die Funktion des Dielektrikums des Koaxialkabels übernehmende Bauteil der Hochdruckdurchführung kann vorzugsweise eine Dichtmasse bzw. ein Dichtelement sein, die oder das in die Längsbohrung eingebracht ist. Diese Dichtmasse bzw. das Dichtelement dient neben der Abdichtungsfunktion der Hochdruckseite gegenüber der Niederdruckseite auch als Dielektrikum. Dazu umschließt diese bzw. dieses den durch die Längsbohrung durchgeführten Innenleiter koaxial in zumindest einem Teilabschnitt der Längsbohrung. Als besonders geeignete Dichtmasse erweist sich eine polymere Masse, idealerweise ein Epoxidharz, die idealerweise in die Längsbohrung eingegossen wird und demzufolge eine stoffschlüssige Verbindung mit dem jeweiligen Abschnitt der Trägerstruktur und dem Innenleiter eingeht.

Das Dichtelement kann ein spezieller Dichtkörper sein, der an entsprechender Stelle in der Längsbohrung positioniert wird. Das Dichtelement ist elastisch, so dass sich dieses bei entsprechender Druckbeaufschlagung von der Hochdruckseite her komprimieren und seine vollständige Dichtwirkung entfalten kann.

Generell kann die Längsbohrung mehrere Abschnitte mit voneinander abweichenden Durchmessern aufweisen. In den unterschiedlichen Abschnitten sind entweder unterschiedliche Bestandteile des Koaxialkabels einbringbar bzw. werden unterschiedliche Funktionen des Koaxialkabels durch Bestandteile der Hochdruckdurchführung realisiert. Beispielsweise ist ein erster Abschnitt der Längsbohrung vorgesehen, vorzugsweise im Niederdruck nahen Bereich, dessen Durchmesser auf den Durchmesser eines konventionellen Koaxialkabels mit vollständigem Aufbau abgestimmt ist. Dadurch kann ein Koaxialkabel inklusive seiner Mantelfläche in besagtem Abschnitt der Längsbohrung passgenau eingeführt werden. Möglich ist es auch, dass der Bohrungsdurchmesser in diesem Bereich größer gewählt ist und das Kabel mit einer den Mantel umgebenden Hülse in die Längsbohrung einsetzbar ist.

Wenigstens ein daran anschliessender weiterer Abschnitt ist durch einen gegenüber dem ersten Abschnitt reduzierten Innendurchmesser der Längsbohrung gekennzeichnet, wodurch eine passgenaue Aufnahme eines Koaxialkabels ermöglicht wird, bei dem zumindest ein Kabelbestandteil zuvor entfernt wurde. Möglich sind unterschiedliche Bereiche, von denen einer eine passgenaue Aufnahme eines Koaxialkabels mit entferntem Mantel gestattet, und ein weiterer Bereich eine passgenaue Aufnahme des Kabels mit entferntem Mantel und Aussenleiter ermöglicht, Vorzugsweise liegen diese Bereiche in axialer Richtung zur Hochdruckseite hintereinander.

Darüber hinaus kann ein weiterer Abschnitt mit vergrößertem Innendurchmesser der Längsbohrung vorgesehen sein. In diesem Abschnitt, der vorzugsweise unmittelbar im Bereich der Öffnung der Längsbohrung zur Hochdruckseite liegt, soll lediglich ein Innenleiter des Koaxialkabels einbringbar sein. Durch den Abstand der Innenwandung zum Innenleiter kann sich ein Ringraum bilden, der sich aufgrund seiner Öffnung zur Hochdruckseite mit einströmenden Fluid füllen kann. Das in diesen Bereich einströmende Fluid legt sich folglich ringförmig und koaxial um einen eingebrachten Innenleiter und übernimmt folglich die Funktion des Dielektrikums. Besonders bevorzugt kann das Fluid bis zu der innerhalb der Längsbohrung eingebrachten Dichtmasse bzw. dem innerhalb der Längsbohrung eingebrachten Dichtelement einströmen.

Besonders bevorzugt ist es, wenn die eingebrachte Dichtmasse bzw. das eingebrachte Dichtelement an wenigstens einem Anschlag innerhalb der Längsbohrung in Axialrichtung angrenzt. Wie bereits zuvor erläutert, gelangt das einströmende Fluid der Hochdruckseite bis zur Dichtmasse bzw. bis zum Dichtelement innerhalb der Längsbohrung. Durch das unter Druck stehende Fluid wirkt auf die Dichtmasse bzw. das Dichtelement eine axialgerichtete Kraft, die diese/dieses auf den Anschlag presst. Es kommt folglich zu einer Kompression der Dichtmasse bzw. des Dichtelementes, wodurch deren/dessen Dichtwirkung verbessert wird. Wenigstens ein Anschlag kann besonders bevorzugt durch eine stufenartige Durchmesserverjüngung der Längsbohrung gebildet sein. Denkbar ist es ebenso, wenigstens ein Stützelement in die Längsbohrung einzubringen, das eine geeignete Anschlagsfläche für die Dichtmasse bzw. das Dichtelement umfasst. Das Stützelement umfasst ebenfalls eine zentrale Bohrung, durch diese der Innenleiter verlaufen kann. Bevorzugt sieht das Stützelement Abschnitte mit unterschiedlichen Aussendurchmessern vor, so dass sich dieses bspw. über mehrere Abschnitte der Längsbohrung der Trägerstruktur erstrecken kann. Die dem Dichtelement zugewandte Stirnseite des Stützelementes umfasst idealerweise eine ebene Fläche, um eine möglichst grossflächige und stabile Anschlagsfläche bereitzustellen.

Das Abstützelement muss aus einem vergleichsweise festen Material bestehen, bspw. Keramik, Glas, Kunststoff oder einem sonstigen nicht elektrisch leitenden Material bzw. einer Kombination aus den vorgenannten Materialien.
Zur Montage der Hochdruckdurchführung an einer den Hoch- und Niederdruckbereich trennenden Struktur kann gemäß einer bevorzugten Ausgestaltung wenigstens eine Überwurfmutter vorgesehen sein, die bspw. auf dem Aussenumfang der Trägerstruktur sitzt. Die Hochdruckdurchführung ist mittels der Überwurfmutter in einer trennenden Struktur verschraubbar.

Ergänzend können noch ein oder mehrere äußere Dichtelemente vorgesehen sein, um eine dichtende Einbringung der Hochdruckführung in die tragende Struktur zu ermöglichen. Diesen Zweck können bspw. ein oder mehrere auf dem Außenumfang der Trägerstruktur sitzende O-Ringe erfüllen.

Neben der erfindungsgemäßen Hochdruckdurchführung betrifft die vorliegende Erfindung ebenfalls ein hydraulisches oder pneumatisches System mit wenigstens einer einen Hoch- und Niederdruckbereich trennenden Struktur, in die wenigstens eine Hochdruckdurchführung gemäß der vorliegenden Erfindung einbringbar ist. Ferner ist durch diese Hochdruckdurchführung wenigstens ein Koaxialkabel von der Niederdruckseite in den Hochdruckbereich geführt.

Besonders bevorzugt handelt es sich hierbei um eine Kolbenzylindereinheit. Die Hochdruckdurchführung dient zur Durchführung eines Koaxialkabels von aussen in den innerhalb des Zylinders liegenden Hochdruckbereich, bspw. zur Durchführung durch den Zylindermantel oder eines entsprechenden Gehäuseteils. Die Einbringung eines Koaxialkabels in den Zylinderraum ist beispielsweise für solche Anwendungsfälle wünschenswert, bei denen mittels einer Messeinrichtung physikalische Eigenschaften der Kolbenzylindereinheit erfasst werden sollen. Anhand dieser gemessenen Größen kann bspw. die aktuelle Kolbenposition ermittelt werden. Das Messverfahren setzt dazu auf hochfrequente Signale, die mittels ein oder mehrerer Koaxialkabel in den Zylinderraum ein- oder ausgekoppelt werden müssen.

Besonders vorteilhaft ist es, wenn der Durchmesser des den Ringraum bildenden Abschnittes der Längsbohrung und/oder der Durchmesser des die Dichtmasse bzw. das Dichtelement aufnehmenden Abschnitts der Längsbohrung auf die dielektrischen Eigenschaften des Fluides innerhalb des Zylinders und/oder der verwendeten Dichtmasse bzw. des Dichtelementes abgestimmt sind, so dass sowohl das Fluid als auch die Dichtmasse bzw. das Dichtelement identische oder zumindest ähnliche dielektrische Eigenschaften haben wie das originäre Dielektrikum des Koaxialkabels. Dadurch kann sichergestellt werden, dass es innerhalb der Hochdruckdurchführung nur zu geringen bzw. zu keinen Impedanz-Abweichungen des Koaxialkabels kommt.

Besonders bevorzugt soll mittels der Messvorrichtung das sogenannte LiView Messverfahren umgesetzt werden, dass auf einer vektoriellen Messung der Streuparameter eines Zylinders beruht. Hierbei werden Messfrequenzen im Bereich von wenigen MHz bis einigen GHz eingesetzt. Um diese hochfrequenten Signale in den Zylinder ein- und auszukoppeln wird die spezielle Hochdruckdurchführung eingesetzt, die mit ihrer sehr kompakten Bauform die koaxiale Durchführung eines Hochfrequenzsignals im obigen Frequenzbereich in den Zylinderhochdruckraum gewährleistet.

Weitere Vorteile und Eigenschaften der Erfindung sollen im Folgenden anhand eines in den Figuren gezeigten Ausführungsbeispiels näher erläutert werden. Es zeigen:
- Figur 1:: eine Seitenansicht der erfindungsgemäßen Hochdruckdurchführung;
- Figur 2:: eine Schnittdarstellung durch die Hochdruckdurchführung der Figur 1 entlang der Schnittachse B'B;
- Figur 3:: eine Seitenansicht der erfindungsgemäßen Kolbenzylindereinheit mit eingesetzten Hochdruckdurchführungen gemäß der vorliegenden Erfindung;
- Figur 4:: eine Vorderansicht der Kolbenzylindereinheit auf das Kolbenauge;
- Figur 5:: eine Schnittdarstellung durch die Kolbenlagerung mit den aufgenommenen Hochdruckdurchführungen entlang der Schnittachse A'A der Figur 4;
- Figur 6:: eine alternative Ausgestaltung der Hochdruckausführung gezeigt in einer Schnittdarstellung entlang einer Schnittachse analog zu Figur 2.

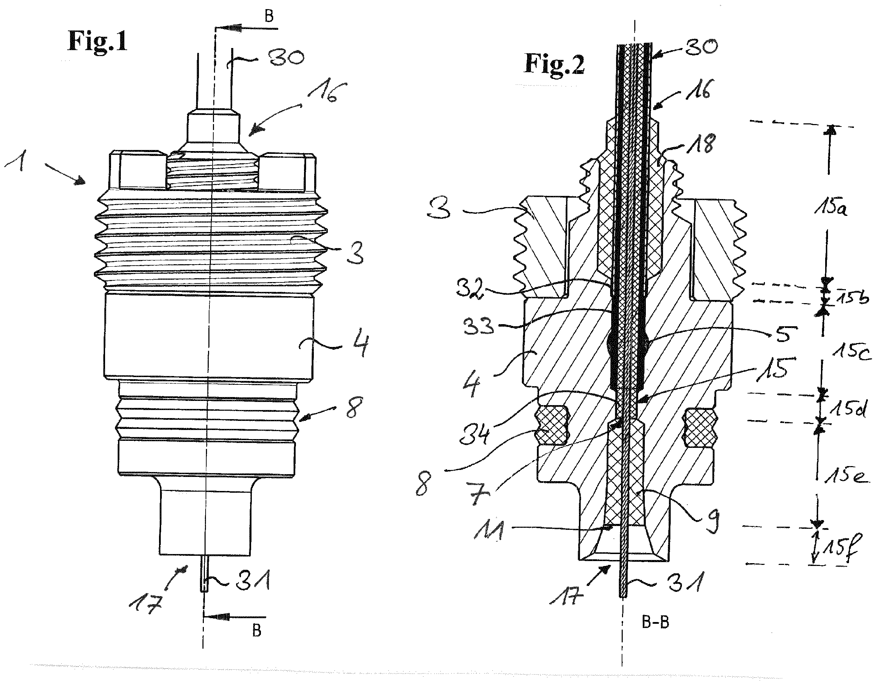

Figur 1 zeigt eine Seitenansicht der erfindungsgemäßen Hochdruckdurchführung 1. Das Gehäuse der Hochdruckdurchführung 1 bildet eine elektrisch leitende Trägerstruktur 4. Die Gehäuseform ist zumindest abschnittsweise zylindrisch, d.h. der Gehäusedurchmesser variiert in Axialrichtung.

In der Schnittdarstellung der Figur 2 ist die Längsbohrung 15 erkennbar, die die Trägerstruktur 4 in Axialrichtung vollständig durchdringt. Über eine obere und untere Gehäuseöffnung 16, 17 ist die Längsbohrung 15 von aussen zugänglich. Die Druckdurchführung 1 dient zur Durchführung eines Koaxialkabels von einem Niederdruckbereich in einen Hochdruckbereich. In der Montagelage liegt die Öffnung 16 im Niederdruckbereich und die Öffnung 17 im Hochdruckbereich. Folglich wird durch die Längsbohrung 15 ein Durchgang zwischen beiden Druckbereichen geschaffen. In der Figurendarstellung ist das eingebrachte Koaxialkabel mit dem Bezugszeichen 30 gekennzeichnet.

Diese geometrische Konstruktion der Hochdruckdurchführung gewährleistet eine koaxiale Durchführung des Innenleiters eines Koaxialkabels. Es sind keine zusätzlichen Schnittstellen bzw. Unterbrechungen des Innenleiters entlang des Signalweges notwendig, wodurch das Risiko von Signalreflexionen im Hochfrequenz-Signal aufgrund von Impedanzänderungen weitestgehend vermieden werden kann. Es lassen sich folglich optimale elektrische Leitungseigenschaften erzielen. Durch die kompakte Bauform und die Integration mehrerer Funktionselemente ergeben sich Kosten- und Zuverlässigkeitsvorteile gegenüber anderen Lösungen.

Die Längsbohrung 15 ist in mehrere Abschnitte unterteilt, die sich gegenseitig in ihrem Bohrungsdurchmesser unterscheiden. Ein erster Abschnitt 15a weist einen ausreichenden Bohrungsdurchmesser auf, um das vollständige Koaxialkabel 30 inklusive seiner Mantelfläche 32 aufzunehmen. Durch die Hülse 18 wird das Kabel 30 innerhalb der Bohrung 15 fixiert. Im Bereich 15b ist der Bohrungsdurchmesser an den Aussendurchmesser des Mantels 32 angepasst.

Der Bohrungsdurchmesser im Abschnitt 15c kann demgegenüber geringfügig kleiner oder gleich gewählt sein. In diesem Bereich wurde nur die Mantelfläche 32 des Koaxialkabels 30 entfernt, wodurch der Aussenleiter 33 des Kabels 30 die Trägerstruktur 4 direkt kontaktiert. Im darauffolgenden Abschnitt 15d ist der Bohrungsdurchmesser so gewählt, dass sich das Dielektrikum 34 des Kabels 30 bei entferntem Aussenleiter 33 unmittelbar an die Bohrungsinnenwand der Trägerstruktur 4 anlegen kann. Der Bereich 15d weist zudem den kleinsten Bohrungsdurchmesser der gesamten Längsbohrung 15 auf. Der Bereich 15e weist wiederum einen größeren Bohrungsdurchmesser auf. In diesem Bereich ist allerdings nur der Innenleiter 31 des Kabels 30 verlegt.

Die Hochdruckdurchführung 1 verwirklicht eine koaxiale Struktur des Kabels 30 über die gesamte Länge von der Niederdruckseite zur Hochdruckseite, d.h. auch für die Abschnitte, in denen ein Teil des Kabels 30 vorab entfernt wurde. Die Funktion der entfernten Kabelbestandteile wird hier durch die Trägerstruktur 4 bzw. die Dichtmasse 9 übernommen. Im Bereich 15a, 15b ist das Kabel 30 noch vollständig. Im Bereich 15c ist hingegen der Kabelmantel 32 entfernt und der Aussenleiter (Schirm) 33 des Kabels 30 wird elektrisch mit der leitfähigen Trägerstruktur 4 im Bereich 5 kontaktiert. Dafür kann der Schirm 33 entweder direkt oder bzw. zusätzlich mittels eines Kontaktelementes, wie zum Beispiel einem gekrimpten metallischen Kontaktelement mit der Trägerstruktur 4 elektrisch verbunden werden.

Im Bereich 15e ist zudem das Dielektrikum 34 des Kabels 30 entfernt. In diesem Bereich ist eine polymerische Abdichtmasse 9 in die Längsbohrung eingebracht, die neben der elektrischen Isolation des Innenleiters 31 gegenüber der leitfähigen Trägerstruktur 4 auch zur Hochdruckabdichtung des Innenleiters 31 bzw. der Niederdruckseite gegenüber der Hochdruckseite dient. Geeignet ist zum Beispiel die Verwendung eines Epoxidharzes als Vergussmasse 9. Alternativ können auch weitere elastische Werkstoffe eingesetzt werden, die sowohl die Abdichtungsfunktion als auch die elektrische Isolation entsprechend den Last- (Druck) und Funktionsbedingungen (elektrisch) entsprechen.

Die Abdichtmasse 9 reicht allerdings nicht bis zur Hochdrucköffnung 17. An den Bereich 15e schliesst sich nämlich ein Abschnitt 15f mit in Öffnungsrichtung konisch zunehmenden Bohrungsdurchmesser an. Innerhalb dieses Bereiches liegt der nackte Innenleiter 31, d.h. zwischen Innenwand der Trägerstruktur 4 und dem Innenleiter 31 bildet sich ein koaxial um den Innenleiter 31 liegender Ringraum, der über die Hochdrucköffnung mit dem einströmenden Fluid der Hochdruckseite befüllbar ist. In diesem Abschnitt fungiert folglich das Fluid als Dielektrikum. Der nackte Innenleiter 31 wird folglich durch die Verengung 7 der Trägerstruktur 4 sowie die Abdichtmasse 9 bis in den Hochdruckraum geführt, wo das übertragene Signal am herausragenden Innenleiter 31 abgegriffen werden kann.

Die Verengung 7 sorgt zudem dafür, dass durch die Druckbelastung des in den Ringraum des Abschnittes 15f einströmenden Fluids die Abdichtmasse 9 gegen die Verengung 7 gedrückt und folglich in Axialrichtung komprimiert wird. Dadurch wird die Abdichtfunktion der Abdichtmasse 9 zusätzlich verstärkt. Der maximale aushaltbare Druck über den Dichtquerschnitt 11 wird über die Grenze bestimmt, bei der die Abdichtmasse 9 durch die Öffnung der Verengung 7 extrudiert werden kann. Dies erfolgt üblicherweise bei Druckverhältnissen, die weit über dem üblichen Betriebsdrücken liegen.

Der Durchmesser der Längsbohrung der leitenden Trägerstruktur 4 in den einzelnen Abschnitten wird so ausgelegt, dass eine optimale Impedanz-Anpassung erfolgen kann. Aus diesem Grund wird der Durchmesser im Abschnitt 15e in Richtung des Hochdruckraums, d.h. im Übergangsbereich zwischen der Verengung 7 und dem Dichtquerschnitt 11 entsprechend der dielektrischen Eigenschaften der Vergussmasse 9 sowie im Abschnitt 15f entsprechend der dielektrischen Eigenschaften des Fluides vergrößert. Durch diese Maßnahme weist das Kabel über die gesamte Längsbohrung eine annähernd konstante Impedanz auf, wodurch Reflexionen eines übertragenen Hochfrequenzsignals effektiv vermieden bzw. weitestgehend reduziert werden.

Die mechanische Befestigung der Hochdruckdurchführung im Hydrauliksystem wird in dem gezeigten Beispiel über eine Überwurfmutter 3 realisiert. Andere Montage- und Abdichtungskonzepte zum Hydrauliksystem sind aber bei gleichbleibender Hochdruckdurchführungsfunktion möglich. Die Hochdruckabdichtung zum Hydrauliksystem (z.B. zum Zylinderkolbenstangenlager eines Hydraulikzylinders) kann über Abdichtungselemente, wie zum Beispiel wenigstens einen O-Ring 8, realisiert sein.

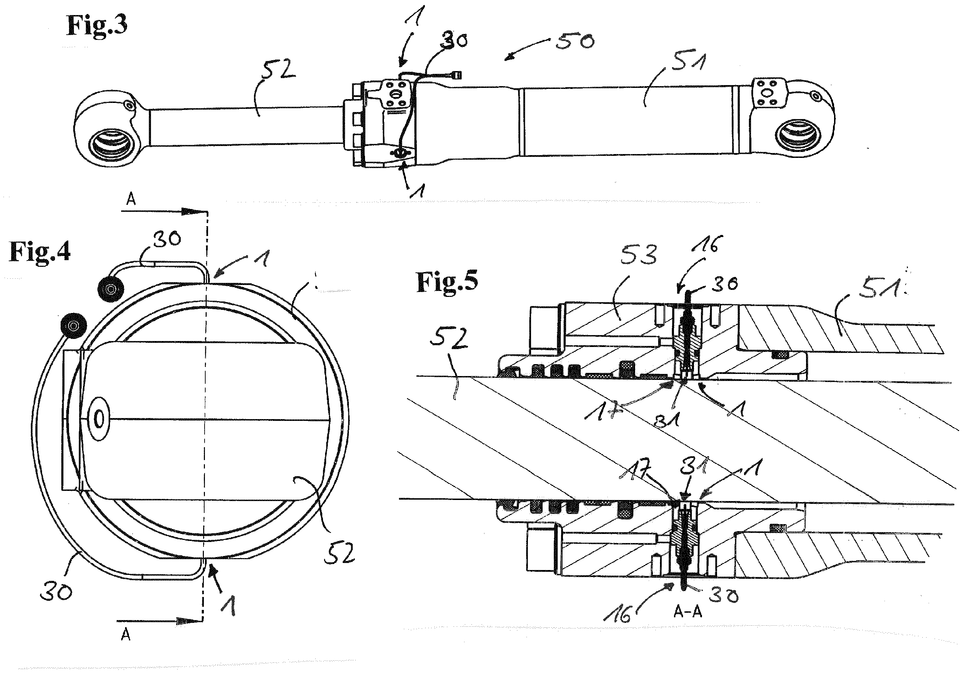

Figur 3 zeigt eine Seitenansicht auf die erfindungsgemäße Zylinderkolbeneinheit 50. Diese besteht aus einem Zylindermantel 51 und einem darin axial verschiebbar gelagerten Kolben mit der Kolbenstange 52. Im Bereich der Kolbenstangenlagerung 53 sind zwei Hochdruckdurchführungen 1 eingebracht, die ausgehend von der Messvorrichtung zwei Koaxialkabel 30 in den Hochdruckbereich der Kolbenzylindereinheit 50 einbringen. Wie dies den Zeichnungen, insbesondere Figur 4 zu entnehmen ist, sind die Hochdruckdurchführungen 1 auf radial gegenüberliegenden Seiten der Mantelfläche 50 in die Kolbenlagerung 53 eingeschraubt.

In der Schnittdarstellung der Figur 5 ist das Ende des Innenleiters 31 zu erkennen, das in den Zylinderraum hineinragt.

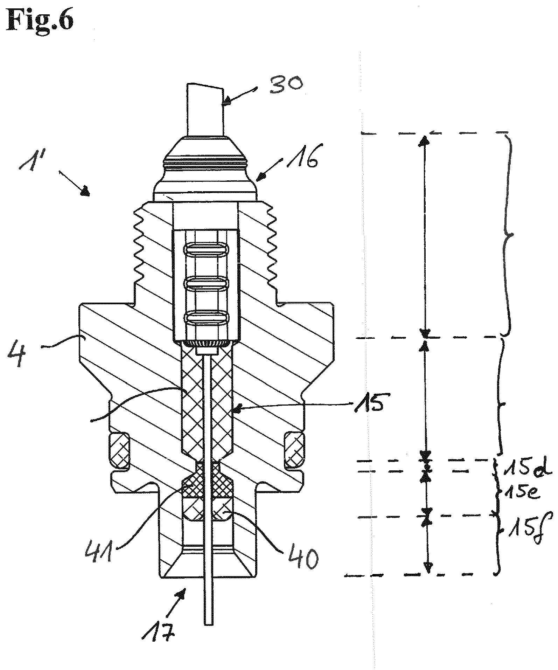

Eine leicht modifizierte Ausführung der erfindungsgemäßen Hochdruckdurchführung ist in Figur 6 dargestellt. Im Wesentlichen unterscheidet sich das Ausführungsbeispiel der Figur 6 hinsichtlich der in die Hochdruckdurchführung integrierten Abdichtung zwischen Hoch- und Niederdruckseite. Bauteile der Figur 6 mit identischer Funktion bzw. Umsetzung im Vergleich zur Ausführung der Figuren 1 bis 5 werden daher in der Figur 6 mit identischen Bezugszeichen bezeichnet. Auf diese Bauteile soll nachfolgend auch nicht mehr näher eingegangen werden.

Der wesentliche Unterschied besteht darin, dass anstelle der im Ausführungsbeispiel der Figuren 1 bis 5 verwendeten Vergussmasse 9 nun ein elastisches Dichtelement 40 im Bereich 15e der Längsbohrung eingebracht ist. Zusätzlich wird ein Stützelement 41 aus einem vergleichsweise festen Material als Anschlag für das Dichtelement 40 eingesetzt. Das Stützelement 41 hat einen variierenden Aussendurchmesser und füllt den Abschnitt 15d mit dem geringsten Innendurchmesser der Längsbohrung 15 vollständig aus. Weiter erstreckt sich das Stützelement 41 auch in den Bereich 15e, wobei der Aussendurchmesser des Stützelementes 41 hier entsprechend an den Innendurchmesser der Bohrung 15 angepasst ist. Die der Öffnung 17 zugewandte Stirnseite des Stützelementes 41 sieht eine ebene Fläche vor um einen möglichst grossflächigen und stabilen Anschlag auszubilden. Eventuell kann diese Fläche auch leicht gekrümmt sein, um eine stabilere Aufnahme des Dichtelementes 40 bei Druckbelastung zu gewährleisten. Das Stützelement 41 muss möglichst unelastisch sein, als geeignete Materialien sind Glas, Keramik oder Kunststoff zu nennen.

Durch die Druckbelastung des in den Ringraum des Abschnittes 15f einströmenden Fluids wird das elastische Dichtelement 40 auf das Stützelement 41 gepresst, wodurch das Dichtelement 40 in Längsrichtung komprimiert wird. Freigelassene Räume bzw. Spalte innerhalb des Dichtelementes 40 werden durch die druckbedingte Verformung gefüllt, wodurch das Dichtelement 40 seine vollständige Dichtwirkung entfaltet.

Wie im vorherigen Ausführungsbeispiel dient das Stützelement 41 sowie das Dichtelement 40 als Ersatz für das in diesem Abschnitt entfernte Dielektrikum des Koaxialkabels 30.

Allgemein lässt sich für die erfindungsgemäße Lösung festhalten, dass die Funktionen elektrische Anbindung und Hochdruckdurchführung in der erfindungsgemäßen Hochdruckdurchführung getrennt sind. Die elektrische Anbindung des Aussenleiters 33 erfolgt im Niederdruckbereich und hat keine Ansprüche auf Dichtigkeit und benötigt auch keine stoffschlüssigen Verbindungen. Sie kann beispielsweise über herkömmliche Crimpverfahren realisiert werden. Das "längsdruckfeste Einsetzen" der erfindungsgemäßen Hochdruckdurchführung 1 kann wahlweise über eine eingebrachte, radial kraftschlüssig wirkendende Aussendichtung 8 zur Aufnahmebohrung in der Hydraulikhochdruckkammer realisiert sein oder die Abdichtung des Innenleiters 31 gegenüber des Aussenleiters 33 geschieht direkt in einer in der Hochdruckapplikation 1 abgebildeten Bohrung 15, in der das druckabdichtende Polymer 9, 40 (kraftschlüssige Dichtung 40 oder stoffschlüssig wirkende polymerische Vergussmass 9) direkt eingebracht ist, um gegen wechselnde Druckbeaufschlagung direkt im Querschnitt belastet zu werden.

Insgesamt wird die Hochdruckdurchführung 1 gemäß den Figuren 1 bis 5 über lediglich zwei Übergangsstellen realisiert, nämlich der Übergang zwischen metallischer Trägerstruktur 4 und Abdichtmasse 9 bzw. Abdichtmasse 9 und Innenleiter 31. Dadurch entsteht eine sehr einfache Konstruktion der Durchführung, die auch günstig hergestellt werden kann. In der modifizierten Ausführung gemäß Figur 6 sind ebenfalls nur die zwei Grenzflächen zwischen Aussenleiter/Isolationswerkstoff mit Druckabdichtungsfunktion/soliden Innenleiter auf derselben Querschnittslänge für die Druckabdichtung von Nöten. Auch hier wird die abdichtende und elektrisch isolierende Funktion rein durch die Polymerwerkstoffeigenschaften des Dichtungselementes 40 sowie feingeometrische Ausführung der Dimensionen zueinander gewährleistet und reduziert dadurch die Länge der Druckdurchführungsfunktion auf ein Minimum.

## Patentansprüche

1. Hochdruckdurchführung zur Durchführung eines Koaxialkabels von einem Niederdruckbereich in einen Hochdruckbereich, wobei die Hochdruckdurchführung eine Trägerstruktur mit wenigstens einer Längsbohrung aufweist, die sich von einer Niederdruckseite der Trägerstruktur bis zu einer Hochdruckseite der Trägerstruktur erstreckt, wobei die Längsbohrung zur Aufnahme zumindest des Innenleiters eines Koaxialkabels geeignet ist, der durchgängig von der Niederdruckseite bis zur Hochdruckseite durch die Längsbohrung durchführbar ist, und wobei die Hochdruckdurchführung ein oder mehrere Komponenten aufweist, die in Axialrichtung der Längsbohrung zumindest abschnittsweise als Aussenleiter und/oder Dielektrikum des durch die Längsbohrung durchgeführten Innenleiters des Koaxialkabels dienen.

2. Hochdruckdurchführung nach Anspruch 1, **dadurch gekennzeichnet, dass** der Übergang des Aussenleiters und/oder Dielektrikums des Koaxialkabels auf eine die Funktion des Aussenleiters und/oder Dielektrikums übernehmende Komponente der Hochdruckdurchführung innerhalb der Längsbohrung liegt, wobei mehrere Übergänge vorzugsweise in Axialrichtung versetzt zueinander liegen.

3. Hochdruckdurchführung nach einem der vorhergehenden Ansprüche, **dadurch gekennzeichnet, dass** die Trägerstruktur elektrisch leitend ist und zumindest abschnittsweise als Aussenleiter eines eingelegten Koaxialkabels dient.

4. Hochdruckdurchführung nach Anspruch 3, **dadurch gekennzeichnet, dass** die Trägerstruktur entweder unmittelbar mit dem Aussenleiter des Koaxialkabels elektrisch verbindbar ist oder mittels wenigstens eines separaten Verbindungselementes, wie bspw. einem gekrimpten metallischen Kontaktelement, elektrisch leitend mit diesem verbindbar ist.

5. Hochdruckdurchführung nach einem der vorhergehenden Ansprüche, **dadurch gekennzeichnet, dass** eine in die Längsbohrung zumindest abschnittsweise eingebrachte Dichtmasse, insbesondere eine polymere Abdichtmasse, idealerweise ein Epoxidharz, und/oder ein Dichtelement als Dielektrikum für den durchgeführten Innenleiter eines Koaxialkabels dient.

6. Hochdruckdurchführung nach einem der vorhergehenden Ansprüche, **dadurch gekennzeichnet, dass** die Längsbohrung mehrere Abschnitte mit voneinander abweichenden Querschnitten, insbesondere Durchmessern, aufweist, bevorzugt einen Abschnitt zur passgenauen Aufnahme eines vollständigen Koaxialkabels bestehend aus Mantel, Aussenleiter, Dielektrikum und Innenleiter, und/oder bevorzugt wenigstens einen Abschnitt zur passgenauen Aufnahme nur eines Teils der Kabelbestandteile, wie insbesondere eine Kombination aus Aussenleiter, Dielektrikum und Innenleiter oder eine Kombination aus Dielektrikum und Innenleiter.

7. Hochdruckdurchführung nach einem der vorhergehenden Ansprüche, **dadurch gekennzeichnet, dass** die Dichtmasse bzw. das Dichtelement in den der Hochdruckseite zugewandten Bereich der Längsbohrung eingebracht ist, wobei die Dichtmasse vorzugsweise an wenigstens einen Anschlag innerhalb der Längsbohrung angrenzt, wodurch die Dichtmasse bzw. das Dichtelement bei Vorliegen eines Hochdruckniveaus an der Hochdruckseite gegen den wenigstens einen Anschlag komprimierbar ist.

8. Hochdruckdurchführung nach Anspruch 7, **dadurch gekennzeichnet, dass** der wenigstens eine Anschlag durch eine stufenartige Durchmesserverjüngung der Längsbohrung oder durch ein in die Längsbohrung eingebrachtes isolierendes Stützelement mit einer stabilen Anschlagsfläche gebildet ist, wobei das Stützelement vorzugsweise aus Kunststoff und/oder Glas und/der Keramik oder eine Kombination daraus besteht.

9. Hochdruckdurchführung nach einem der vorhergehenden Ansprüche, **dadurch gekennzeichnet, dass** die Längsbohrung an ihrem der Hochdruckseite zugewandten Eingang einen Ringraum zwischen Trägerstruktur und einem dort durchgeführten Innenleiter eines Koaxialkabels bildet, wobei der Ringraum von der Hochdruckseite zugänglich ist, so dass ein dort vorliegendes Fluid in den Ringraum einströmen kann, idealerweise bis zu der in Axialrichtung weiter innen in der Längsbohrung liegenden Dichtmasse bzw. bis zu dem in Axialrichtung weiter innen in der Längsbohrung liegenden Dichtelement.

10. Hochdruckdurchführung nach einem der vorhergehenden Ansprüche, **dadurch gekennzeichnet, dass** die tragende Struktur wenigstens eine Überwurfmutter zur Montage an einer einen Hoch- und Niederdruckbereich trennenden Struktur aufweist.

11. Hochdruckdurchführung nach einem der vorhergehenden Ansprüche, **dadurch gekennzeichnet, dass** ein oder mehrere Dichtelemente, insbesondere O-Ringe, auf der Aussenseite der Trägerstruktur vorgesehen sind.

12. Hydraulisches oder pneumatisches System mit wenigstens einer einen Hoch- und Niederdruckbereich trennenden Struktur, in die wenigstens eine Hochdruckdurchführung gemäß einem der vorhergehenden Ansprüche einbringbar ist und mittels dieser wenigstens ein Koaxialkabel aus dem Niederdruckbereich in den Hochdruckbereich durch die trennende Struktur durchführbar ist.

13. System nach Anspruch 12, **dadurch gekennzeichnet, dass** der Durchmesser des den Ringraum bildenden Abschnitts der Längsbohrung und/oder der die Dichtmasse bzw. das Dichtelement aufnehmende Durchmesser der Längsbohrung derart auf die dielektrischen Eigenschaften des darin enthaltenen Fluids und/oder der Dichtmasse bzw. des Dichtelementes abgestimmt ist, so dass es innerhalb der Hochdruckdurchführung zu geringen oder keiner Impedanzabweichung des eingebrachten Koaxialkabels kommt.

14. System nach einem der Ansprüche 10 oder 11, **dadurch gekennzeichnet, dass** das System eine Kolbenzylindereinheit ist und die wenigstens eine Hochdruckdurchführung in den Zylindermantel als trennende Struktur einbringbar ist, insbesondere im Bereich eines Kolbenstangenlagers des Zylindermantels.

15. System nach Anspruch 14, **dadurch gekennzeichnet, dass** eine Messvorrichtung zur Messung einer Eigenschaft der Kolbenzylindereinheit vorgesehen ist, insbesondere zur Bestimmung der Kolbenposition, wobei die Steuereinheit über die ein oder mehreren Koaxialkabel hochfrequente Signale in den Hochdruckbereich ein- oder auskoppelt.
